# EUROPEAN PATENT SPECIFICATION

(11) **EP 2 759 097 B1**
(45) Date of publication and mention of the grant of the patent: **25.11.2015**
(21) Application number: 11761464.4
(22) Date of filing: 20.09.2011
(51) Int. Cl.: H04L 12/46

(54) **METHOD AND APPARATUS FOR NULL VIRTUAL LOCAL AREA NETWORK IDENTIFICATION TRANSLATION**
VERFAHREN UND VORRICHTUNG FÜR NULL-VLAN-IDENTIFIZIERUNGSÜBERSETZUNG
PROCÉDÉ ET APPAREIL POUR TRADUCTION D'IDENTIFIANT NUL DE RÉSEAU LOCAL VIRTUEL

(43) Date of publication of application: 30.07.2014
(73) Proprietor: Thomson Licensing, 92130 Issy-les-Moulineaux (FR)
(72) Inventor: BROERMAN, Keith Robert, Carmel, Indiana 46032 (US)
(74) Representative: Rittner, Karsten
(86) International application number: PCT/US2011/052259
(87) International publication number: WO 2013/043152

(56) References cited:
- US-B1- 6 847 620

## Description

### FIELD OF THE INVENTION

The present invention relates to home gateway (router) devices.

### BACKGROUND OF THE INVENTION

A home gateway (router) device may also be called a residential gateway device. Such devices are typically used to connect devices in a home to each other and to the Internet. Such gateway devices may combine a Digital Subscriber Line (DSL) modem or cable modem, a network switch, a router, and a wireless access point (AP). A home gateway device may be a router, a bridge or a brouter.

In a home gateway (router) device, it is desired to treat certain data streams (voice, video, etc.) with Quality of Service (QoS). Data streams (packets) may carry multimedia including audio, video, data or any other content. Typically, streams of such packets include an IEEE 802.1Q Virtual Local Area Network (VLAN) header containing an IEEE 802.1p priority field, whose value indicates the desired QoS treatment. However, some network operators desire QoS treatment without the trouble of defining and configuring VLANs. The IEEE 802.1Q specification allows for this by allocating VLAN ID = 0 as 'no VLAN' or the 'Null' VLAN. Specifically, a VLAN tagged packet with VLAN ID (VID) = 0 indicates that all but the tag's IEEE 802.1p priority field should be ignored. In IEEE 802.1Q, valid VLAN IDs range from 1 to 4094, and IEEE 802.1Q-compliant network protocol stacks permit only this range. However, some network switches, such as those commonly found within home gateway devices, do not fully comply with IEEE 802.1Q and may treat all VLAN-tagged packets, including those with VID=0, as true VLAN tagged packets. As a result, these Null VLAN packets may not be handled properly by the switch or by standard IEEE 802.1Q-compliant protocol stacks since the VLAN ID does not match the Default VID or other valid predefined VIDs. As a result, on ingress the switch may treat these packets as residing on a VLAN distinct from the Default VID, and/or the IEEE 802.1Q compliant protocol stack may drop these 'invalid VLAN' packets. On egress the switch may discard these 'invalid VLAN' packets or flood them to all local area network (LAN) ports. Any of these scenarios leads to undesired and unacceptable operation.

One possible solution is to ensure that the chosen switch hardware is fully IEEE 802.1Q compliant (does not treat VLAN VID=0 as a real VLAN.) If the selected hardware switch is not fully IEEE 802.1Q compliant, select a fully IEEE 802.1Q compliant switch for use in the home gateway. Of course, this approach may constrain the gateway vendor in terms finding a cost-effective silicon solution (based on hardware availability, pricing, etc.) US 6847620 discloses setting a default VLAN ID of a station to null.

### SUMMARY OF THE INVENTION

The present invention relates to home gateway devices. In particular, in the present invention a home gateway device sends and receives IEEE 802.1p-tagged packets. The IEEE 802.1p tagged packets are internally translated to and from packets having a valid VLAN ID so that IEEE 802.1Q non-compliant switch hardware can interoperate with IEEE 802.1Q-compliant protocol stacks.

In the present invention, IEEE 802.1p-only tagged streams (VLAN ID = 0) are internally translated to a valid predefined VLAN ID so that the protocol stack treats the stream as if it was carried on a valid VLAN ID. When the protocol stack needs to transmit these stream packets back out through the switch, the predefined VLAN ID is translated back to VID=0 before being sent to the switch. The result is that the packets are handled with the proper QoS treatment, while permitting the use of IEEE 802.1 Q non-compliant switch hardware.

A method and apparatus are described including setting a default virtual local area network identification number of a switch to 0, receiving a data packet from a local area network interface, applying a virtual local area network header with identification number 0, if the data packet is untagged, determining if a virtual local area network identification number in a header of the data packet is a first predefined value, translating the virtual local area network identification number to a second predefined value in the header of the data packet if the virtual local area network identification number is equal to the first predefined value and forwarding the data packet to a local area network protocol stack network interface. Also described are a method and apparatus including creating a table entry in a switch virtual local area network table for virtual local area network identification number 0, receiving a data packet from a local area network protocol stack network interface, determining if a virtual local area network identification number in a header of the data packet is a first predefined value, translating the virtual local area network identification number to a second predefined value in the header of the data packet if the virtual local area network identification number is equal to the first predefined value, forwarding the data packet to a host management port in the switch, performing a table look-up in the switch virtual local area network table to locate a correct local area network interface to which to forward the data packet and forwarding the data packet from the host management port of the switch to the correct local area network interface.

### BRIEF DESCRIPTION OF THE DRAWINGS

The present invention is best understood from the following detailed description when read in conjunction with the accompanying drawings. The drawings include the following figures briefly described below:
Fig. 1 shows a home gateway (router) device with network interfaces, switch, and host CPU.
Fig. 2 is an expanded view of the switch.
Fig. 3 is an expanded view of the functionality hosted by the CPU.
Fig. 4 is a flowchart for the process of receiving packets from the LAN and passing them to the protocol stack.
Fig. 5 is a flowchart for the process of transmitting packets to the LAN from the protocol stack.
Fig. 6 is a flowchart for the process of translating packets from the LAN in accordance with the principles of the present invention.
Fig. 7 is a flowchart for the process of translating packets to the LAN in accordance with the principles of the present invention.
Fig. 8 is a flowchart for the process of initializing the switch in accordance with the principles of the present invention.

### DETAILED DESCRIPTION OF THE PREFERRED EMBODIMENTS

Typically a router, and thus, a home gateway device as used herein, has a control plane and a forwarding plane. The control plane usually includes static (preconfigured) and/or dynamically generated routing tables. The forwarding plane forwards packets between ingress and egress interfaces. Routers (home gateway devices) ensure that packets are forwarded to the correct network interface using information in the packet headers and routing tables.

In the present invention, the switch is initialized as follows:
1. The Default VID of the switch is changed from its default value (typically, 1) to a value of 0. Switches apply a VLAN tag with VID=Default VID to untagged ingress packets. Hence, non-tagged packets received by the switch are treated as belonging to the Default VID. In the present invention, the switch therefore treats non-tagged ingress packets as belonging to VID=0 in accordance with network operators' wishes to avoid multiple VLANs and their configuration.
2. A switch VLAN table entry for VID=0 is created. The switch uses the table entry on packet egress to determine which egress ports are associated with VID 0 when sending VID 0 tagged packets. In a home gateway (router) device this table entry typically associates all LAN switch ports of the home gateway with VID 0.

In the present invention, when untagged or IEEE 802.1p tagged (VID=0) packets are received on a switch LAN port, they are forwarded to the host management port of the switch with a VLAN tag having VID=0. The host management port connects to the host processor LAN network driver (which executes on the host CPU). The host processor LAN network interface connects the LAN network driver to the LAN network (NW) protocol stack to send/receive packets to/from the host management port. The host CPU functionality includes a dual protocol stack - a wide area network (WAN) protocol stack and a LAN protocol stack. In the present invention, a translation layer is added to the LAN network driver to translate received packets with VID=0 to packets with a valid predefined IEEE 802.1Q protocol stack VID (typically, VID=1). Translation to a valid predefined VID (1 to 4094) ensures that these packets will be properly processed per the IEEE 802.1Q spec by the IEEE 802.1Q compliant network protocol stack. The LAN network driver then passes these translated packets to the LAN network protocol stack per normal operation. When the LAN protocol stack wishes to send an IEEE 802.1p tagged packet, it passes the packet (with valid predefined VLAN VID=1) to the LAN network driver. In this direction (transmit/egress) the LAN network driver translation layer translates predefined VID=1 back to VID=0 and sends the frame to the host management port. In the present invention the switch controller consults its LAN table VID=0 entry to decide to which LAN port(s) the packet will be forwarded.

As a result of the present invention, the IEEE 802.1Q non-compliant switch operates in a fashion compatible with the IEEE 802.1Q protocol stack: On ingress, IEEE 802.1p-only tagged packets are not discarded by the switch or by the IEEE 802.1Q protocol stack, Additionally, untagged packets are treated as belonging to the Default VLAN (VID=0) in accordance with network operators' wishes to avoid multiple VLANs and their configuration. On egress, IEEE 802.1p-only tagged packets are not discarded by the switch or flooded to all LAN switch ports.

On the receive side of operations, initialization is required. Specifically, the default virtual local area network identification number of the switch is set to 0. A data packet is received by a switch from one of the local area network interfaces. If the data packet is untagged, then a virtual local area network header with identification number 0 is applied to the data packet by the switch. The data packet is examined by the local area network driver to determine if the virtual network local area network identification number in the header is a first predefined value. If the virtual network local area network identification number in the header is the first predefined value, then the virtual network local area network identification number is translated to a second predefined value by the local area network driver. The data packet is then forwarded to a local area network protocol stack network interface by the local area network driver.

On the transmit side of operations, initialization is required. Specifically, a table entry is created in a switch virtual local area network table for a virtual local area network identification number 0. A data packet is received by a host management port of the switch from a local area network protocol stack network interface. The local area network driver determines if a virtual local area network identification number in a header of the data packet is a first predefined value. If the virtual local area network identification number in the header of the data packet is the first predefined value, then the local area network driver translates the virtual local area network identification number in the header of the data packet to a second predefined value. The local area network driver then forwards the data packet to the host management port of the switch. The switch then performs a table lookup in the switch virtual local area network table to locate a correct local area network interface to which to forward the data packet. The switch then forwards the data packet to the correct local area network interface.

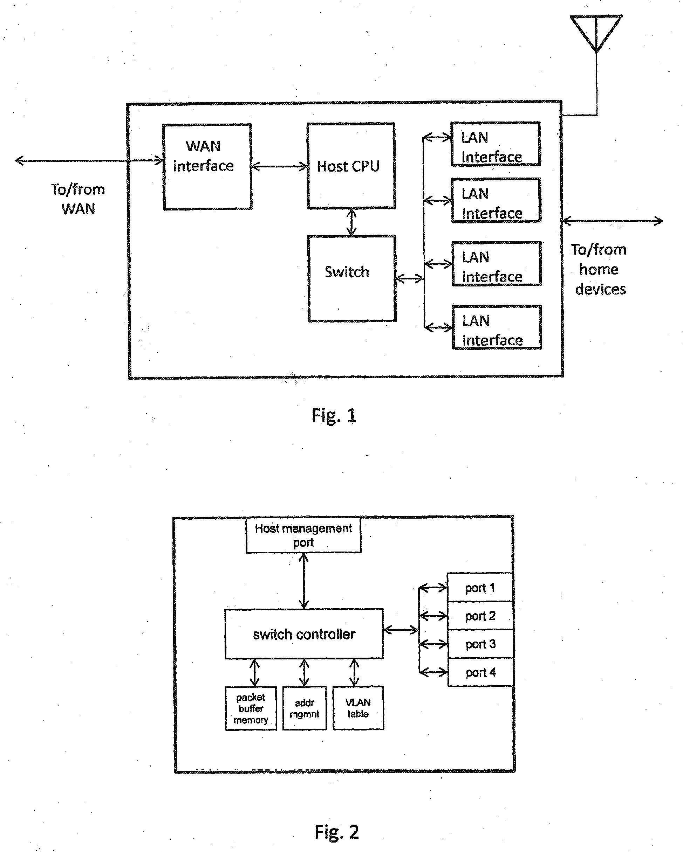

Fig. 1 shows a home gateway (router, bridge, brouter) device with network interfaces, switch, and host CPU. The home gateway (router) device includes a WAN interface for sending/receiving packets to/from a WAN. This can be via DSL modem, cable modem, or any other modem which operates to connect the home gateway (router, bridge, brouter) device to a WAN. The WAN interface is connected to and in communication with the WAN protocol stack hosted by the home gateway (router) device CPU. The home gateway (router) device has one or more LAN interfaces. As shown here there are four LAN interfaces. The LAN interfaces connect various home devices such as laptops, computers, dual mode smart phones, Personal Digital Assistants (PDAs), printers, and any other peripheral devices to the home gateway (router) device. That is, the home gateway (router) device provides the communication paths to permit communication between the WAN and the various LAN devices in the home. This is accomplished also using a switch (more fully described below) and the host CPU (also more fully described below). The LAN interfaces may be in communication with the various devices via wired line, wireless, coaxial cable, etc.

Fig. 2 is an expanded view of the switch, which includes a switch controller, packet buffer memory, address management logic, and VLAN table logic, in addition to several switch ports. Among other tasks, the switch controller manages packet buffer memory, performs address management, and performs VLAN header processing using VLAN table data configured by the host CPU. The switch has a host management port which is in communication with the LAN network driver which executes on the host CPU. The switch also has one or more LAN interfaces/ports. Four LAN interfaces/ports are shown. Each interface/port may contain MAC (media access control) and Physical Layer (PHY) logic to communicate directly with home devices, or may simply provide MAC layer logic for connection with home gateway PHY devices located external to the switch.

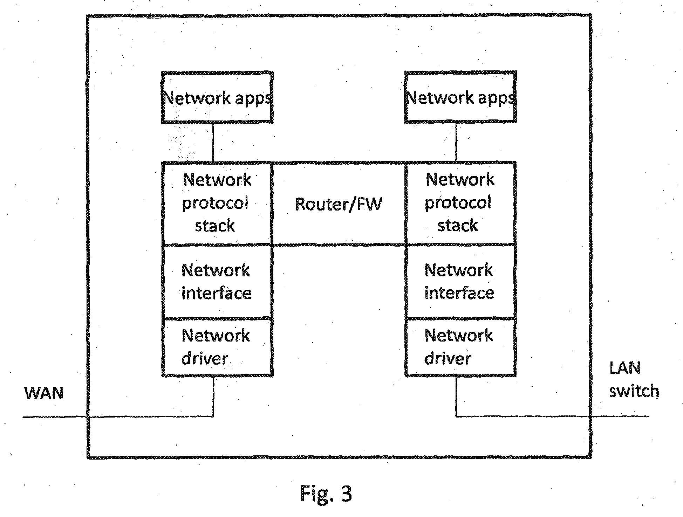

Fig. 3 is an expanded view of the functionality hosted by the CPU. This functionality includes WAN and LAN network protocol stacks which communicate with network drivers through their respective network interfaces. This functionality also includes a router and firewall (FW) to either forward (route) or bridge packets between the WAN and LAN networks. The LAN network driver operates to transmit (send)/receive packets to/from the host management port. The LAN network driver of the present invention includes a new layer denominated a translation layer herein. The translation layer translates packets received from the switch with VID=0 to packets with predefined VID=1.

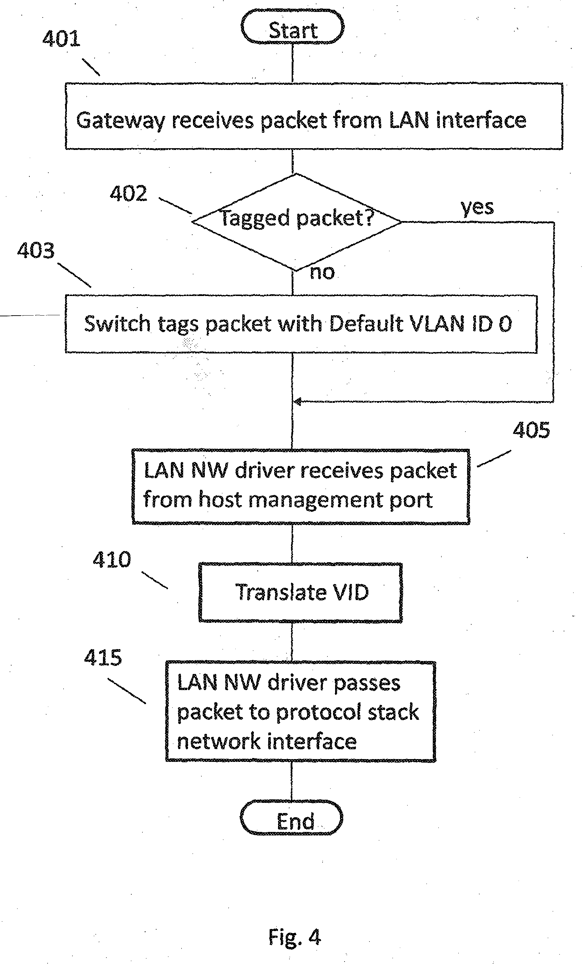

Fig. 4 is a flowchart for the process of receiving packets from the LAN in accordance with the principles of the present invention. The method of the present invention is performed in the translation layer of the network driver. The LAN network driver may be implemented in hardware, software, firmware, special purpose processors or any combination thereof. For packets received from the LAN interfaces 401, the switch determines at 402 if the received packet is tagged. If the received packet is not tagged then the switch applies a VLAN tag (VID=0) to untagged packets at 403 and forwards them to the host management port. If the received packet is tagged, then processing proceeds to 405. The host management port forwards the packets to the host CPU (processor) where they are received by the LAN network driver. The packet is received at (by) the network driver at 405. The network driver may perform VLAN translation at 410 in accordance with the principles of the present invention. In 415 the LAN network driver forwards the packet to the protocol stack via its network interface.

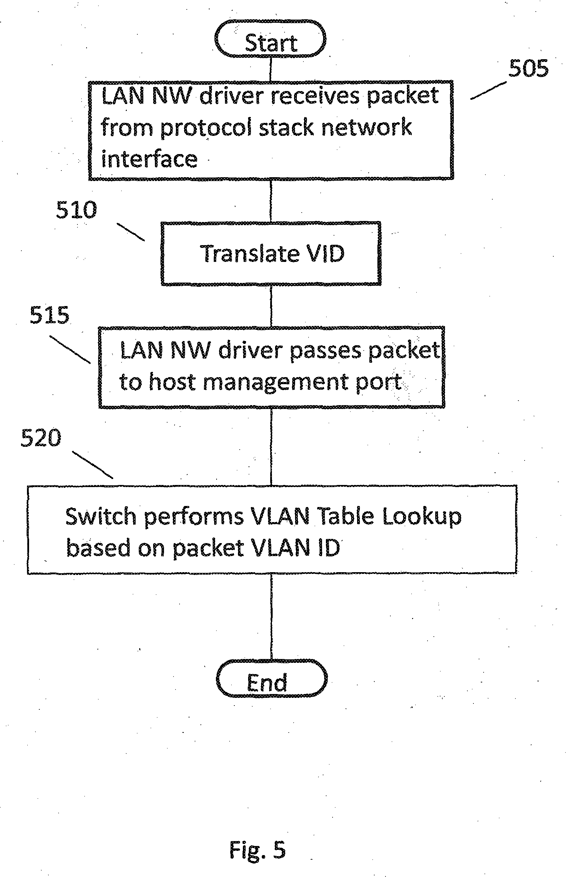

Fig. 5 is a flowchart for the process of transmitting packets to the LAN in accordance with the principles of the present invention. The method of the present invention is performed in the translation layer 510 of the network driver. The network driver may be implemented in hardware, software, firmware, special purpose processors or any combination thereof. The LAN protocol stack forwards LAN-bound packets to the LAN network driver via its network interface. The packet is received at (by) the network driver at 505. The network driver may perform VLAN translation at 510 in accordance with the principles of the present invention. At 515 the network driver forwards the packet to the host management port. At 520 the switch controller performs a VLAN table lookup to determine on which LAN interface(s) to transmit the packet.

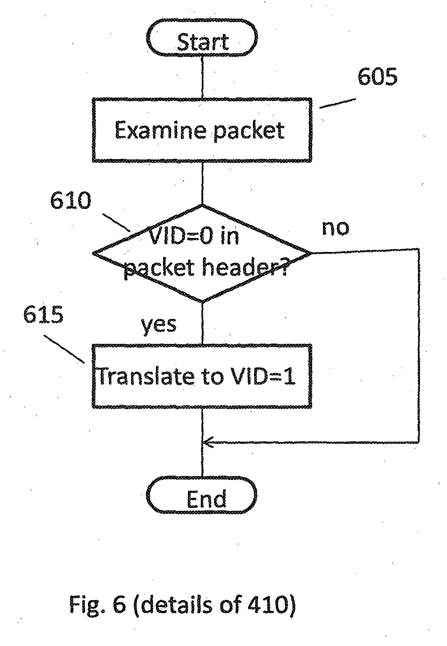

Fig. 6 is a flowchart for the LAN network driver receive side translation layer (410 in Fig 4) in accordance with the principles of the present invention. The packet is received at (by) the LAN network driver at 605. The LAN network driver determines if the received packet has VID = 0 at 610. If the VID is not equal to 0, then the process ends. If the VID = 0 then at 615 the VID of the packet header is changed (translated) to a predefined value of 1.

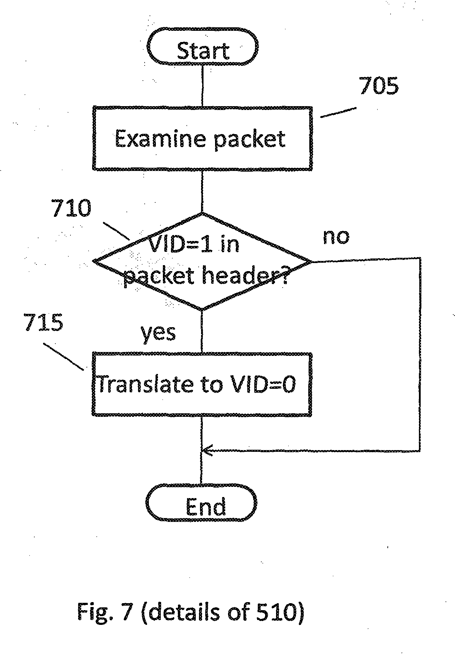

Fig 7 is a flowchart for the LAN network driver transmit (send) side translation layer (510 in Fig.5) in accordance with the principles of the present invention. The packet is received at (by) the LAN network driver at 705. The LAN network driver determines if the received packet has predefined VID = 1 at 710. If the VID is not equal to 1, then the process ends. If the VID = 1 then at 715 the VID of the packet header is changed (translated) to 0.

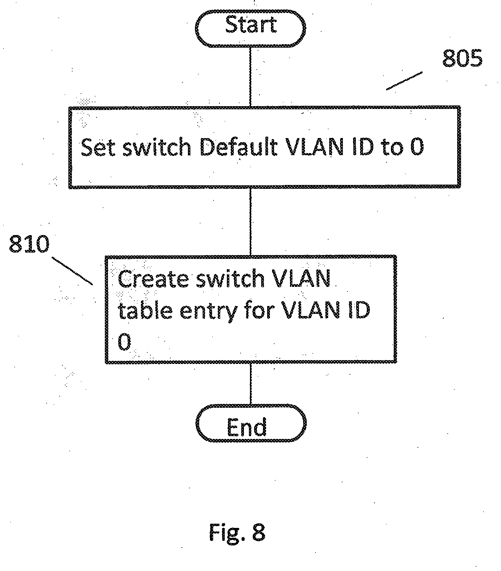

Fig. 8 is a flowchart for the process of initializing the switch in accordance with the principles of the present invention. At 805 the Default VLAN ID of the switch is changed from its default value (typically, 1) to a value of 0. In 810 a switch VLAN table entry for VID 0 is created.

It is to be understood that the present invention may be implemented in various forms of hardware, software, firmware, special purpose processors, or a combination thereof. Preferably, the present invention is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method, said method comprising:
setting a default virtual local area network identification number of a switch to 0;
receiving a data packet from a local area network interface;
applying a virtual local area network header with identification number 0 by said switch if said default virtual local area network identification number of said switch is 0 and if the data packet is untagged;
determining if a virtual local area network identification number in a header of said data packet is a first predefined value;
translating the virtual local area network identification number to a second predefined value in said header of said data packet if said virtual local area network identification number is equal to said first predefined value; and
forwarding said data packet to a local area network protocol stack network interface.

2. The method according to claim 1, wherein said first predefined value is 0 and said second predefined value is a predefined valid virtual local area network identification number in a range of 1 to 4094.

3. The method according to claim 1, wherein said applying step is accomplished by said switch setting the virtual local area network identification number of said data packet to the default virtual local area network identification number.

4. A method, said method comprising:
creating a table entry in a switch virtual local area network table for virtual local area network identification number 0;
receiving a data packet from a local area network protocol stack network interface;
determining if a virtual local area network identification number in a header of said data packet is a first predefined value;
translating the virtual local area network identification number to a second predefined value in said header of said data packet if said virtual local area network identification number is equal to said first predefined value;
forwarding said data packet to a host management port in the switch;
performing a table look-up in said switch virtual local area network table to locate a correct local area network interface to which to forward said data packet; and
forwarding said data packet from said host management port of said switch to said correct local area network interface.

5. The method according to claim 4, wherein said first predefined value is a predefined valid virtual local area network identification number in a range of 1 to 4094 and said second predefined value is 0.

6. The method according to claim 4, wherein said performing step is accomplished using said switch virtual local area network table entry equal corresponding to virtual local area network identification number 0.

7. An apparatus, comprising:
a switch having a default virtual local area network identification number of 0;
said switch adapted to receive a data packet from a local area network interface, said data packet being one of a tagged data packet and an untagged data packet;
said switch adapted to apply a virtual local area network header with identification number 0 to said untagged data packet, if said default virtual local area network identification number of said switch is 0, thus tagging said untagged data packet;
a local area network driver adapted to receive said tagged data packet;
said local area network driver adapted to determine if a virtual local area network identification number in a header of said tagged data packet is a first predefined value;
said local area network driver adapted to translate the virtual local area network identification number to a second predefined value in said header of said data packet if said virtual local area network identification number is equal to said first predefined value; and
said local area network driver adapted to forward said data packet to a local area network protocol stack network interface.

8. The apparatus according to claim 7, wherein said apparatus is a home gateway device.

9. The apparatus according to claim 8, wherein said home gateway device is one of a router, a bridge and a brouter.

10. The apparatus according to claim 5, wherein said first predefined value is 0 and said second predefined value is a predefined valid virtual local area network identification number in a range of 1 to 4094.

11. An apparatus, comprising:
a switch having a table entry in a switch virtual local area network table for virtual local area network identification number 0;
a local area network driver adapted to transmit a tagged data packet to a host management port of said switch;
said local area network driver adapted to determine if a virtual local area network identification number in a header of a tagged data packet is a first predefined value;
said local area network driver adapted to translate the virtual local area network identification number to a second predefined value in said header of said tagged data packet if said virtual local area network identification number is equal to said first predefined value;
said local area network driver adapted to forward said tagged data packet to a host management port in the switch;
said switch adapted to perform a table look-up in said switch virtual local area network table to locate a correct local area network interface to which to forward said data packet; and
said switch adapted to forward said data packet from said host management port of said switch to said correct local area network interface.

12. The apparatus according to claim 11, wherein said first predefined value is a predefined valid virtual local area network identification number in a range of 1 to 4094 and said second predefined value is 0.

13. The apparatus according to claim 11, wherein said apparatus is a home gateway device.

14. The apparatus according to claim 13, wherein said home gateway device is one of a router, a bridge and a brouter.

## Patentansprüche

1. Verfahren, wobei das Verfahren umfasst:
Einstellen einer Standardkennzahl eines virtuellen lokalen Netzes eines Switches auf 0;
Empfangen eines Datenpakets von einer Schnittstelle des lokalen Netzes;
Anwenden eines Anfangsblocks des virtuellen lokalen Netzes mit der Kennzahl 0 durch den Switch, falls die Standardkennzahl des virtuellen lokalen Netzes des Switches 0 ist und falls das Datenpaket nicht markiert ist;
Bestimmen, ob eine Kennzahl des virtuellen lokalen Netzes in einem Anfangsblock des Datenpakets ein erster vordefinierter Wert ist;
Übersetzen der Kennzahl des virtuellen lokalen Netzes in einen zweiten vordefinierten Wert in dem Anfangsblock des Datenpakets, falls die Kennzahl des virtuellen lokalen Netzes gleich dem ersten vordefinierten Wert ist; und
Weiterleiten des Datenpakets an eine Protokollstapel-Netzschnittstelle des lokalen Netzes.

2. Verfahren nach Anspruch 1, wobei der erste vordefinierte Wert 0 ist und wobei der zweite vordefinierte Wert eine vordefinierte gültige Kennzahl des virtuellen lokalen Netzes in einem Bereich von 1 bis 4094 ist.

3. Verfahren nach Anspruch 1, wobei der Schritt des Anwendens dadurch erreicht wird, dass der Switch die Kennzahl des virtuellen lokalen Netzes des Datenpakets auf die Standardkennzahl des virtuellen lokalen Netzes einstellt.

4. Verfahren, wobei das Verfahren umfasst:
Erzeugen eines Tabelleneintrags in einer Switch-Tabelle eines virtuellen lokalen Netzes für die Kennzahl 0 des virtuellen lokalen Netzes;
Empfangen eines Datenpakets von einer Protokollstapel-Netzschnittstelle des lokalen Netzes;
Bestimmen, ob eine Kennzahl des virtuellen lokalen Netzes in einem Anfangsblock des Datenpakets ein erster vordefinierter Wert ist;
Übersetzen der Kennzahl des virtuellen lokalen Netzes in einen zweiten vordefinierten Wert in dem Anfangsblock des Datenpakets, falls die Kennzahl des virtuellen lokalen Netzes gleich dem ersten vordefinierten Wert ist;
Weiterleiten des Datenpakets an einen Host-Managementport in dem Switch,
Ausführen eines Tabellennachschlagens in der Switch-Tabelle des virtuellen lokalen Netzes, um eine richtige Schnittstelle des lokalen Netzes, an die das Datenpaket weiterzuleiten ist, zu ermitteln; und
Weiterleiten des Datenpakets von dem Host-Managementport des Switches an die richtige Schnittstelle des lokalen Netzes.

5. Verfahren nach Anspruch 4, wobei der vordefinierte Wert eine vordefinierte gültige Kennzahl des virtuellen lokalen Netzes in einem Bereich von 1 bis 4094 ist und der zweite vordefinierte Wert 0 ist.

6. Verfahren nach Anspruch 4, wobei der Schritt des Ausführens unter Verwendung des Switch-Tabelleneintrags des virtuellen lokalen Netzes gleich entsprechend der Kennzahl 0 des virtuellen lokalen Netzes erreicht wird.

7. Vorrichtung, die umfasst:
einen Switch, der eine Standardkennzahl des virtuellen lokalen Netzes von 0 aufweist;
wobei der Switch dafür ausgelegt ist, von einer Schnittstelle des lokalen Netzes ein Datenpaket zu empfangen, wobei das Datenpaket ein markiertes Datenpaket oder ein nichtmarkiertes Datenpaket ist;
wobei der Switch dafür ausgelegt ist, auf das nichtmarkierte Datenpaket einen Anfangsblock des virtuellen lokalen Netzes mit der Kennzahl 0 anzuwenden, falls die Standardkennzahl des virtuellen lokalen Netzes des Switches 0 ist, und somit das nichtmarkierte Datenpaket zu markieren;
wobei ein Treiber des lokalen Netzes dafür ausgelegt ist, das markierte Datenpaket zu empfangen;
wobei der Treiber des lokalen Netzes dafür ausgelegt ist zu bestimmen, ob eine Kennzahl des virtuellen lokalen Netzes in einem Anfangsblock des markierten Datenpakets ein erster vordefinierter Wert ist;
wobei der Treiber des lokalen Netzes dafür ausgelegt ist, die Kennzahl des virtuellen lokalen Netzes in einen zweiten vordefinierten Wert in dem Anfangsblock des Datenpakets zu übersetzen, falls die Kennzahl des virtuellen lokalen Netzes gleich dem ersten vordefinierten Wert ist; und
wobei der Treiber des lokalen Netzes dafür ausgelegt ist, das Datenpaket an eine Protokollstapel-Netzschnittstelle des lokalen Netzes weiterzuleiten.

8. Vorrichtung nach Anspruch 7, wobei die Vorrichtung ein Home-Gateway-Gerät ist.

9. Vorrichtung nach Anspruch 8, wobei das Home-Gateway-Gerät ein Router oder eine Bridge oder ein Brouter ist.

10. Vorrichtung nach Anspruch 5, wobei der erste vordefinierte Wert 0 ist und wobei der zweite vordefinierte Wert eine vordefinierte gültige Kennzahl des virtuellen lokalen Netzes in einem Bereich von 1 bis 4094 ist.

11. Vorrichtung, die umfasst:
einen Switch, der einen Tabelleneintrag in einer Switch-Tabelle eines virtuellen lokalen Netzes für eine Kennzahl 0 des virtuellen lokalen Netzes aufweist;
einen Treiber des lokalen Netzes, der dafür ausgelegt ist, ein markiertes Datenpaket an einen Host-Managementport des Switches zu senden;
wobei der Treiber des lokalen Netzes dafür ausgelegt ist zu bestimmen, ob eine Kennzahl des virtuellen lokalen Netzes in einem Anfangsblock eines markierten Datenpakets ein erster vordefinierter Wert ist;
wobei der Treiber des lokalen Netzes dafür ausgelegt ist, die Kennzahl des virtuellen lokalen Netzes in einen zweiten vordefinierten Wert in dem Anfangsblock des markierten Datenpakets zu übersetzen, falls die Kennzahl des virtuellen lokalen Netzes gleich dem ersten vordefinierten Wert ist;
wobei der Treiber des lokalen Netzes dafür ausgelegt ist, das markierte Datenpaket an einen Host-Managementport in dem Switch weiterzuleiten;
wobei der Switch dafür ausgelegt ist, in der Switch-Tabelle des virtuellen lokalen Netzes ein Tabellennachschlagen auszuführen, um eine richtige Schnittstelle des lokalen Netzes, an die das Datenpaket weiterzuleiten ist, zu ermitteln; und
wobei der Switch dafür ausgelegt ist, das Datenpaket von dem Host-Managementport des Switches an die richtige Schnittstelle des lokalen Netzes weiterzuleiten.

12. Vorrichtung nach Anspruch 11, wobei der erste vordefinierte Wert eine vordefinierte gültige Kennzahl des virtuellen lokalen Netzes in einem Bereich von 1 bis 4094 ist und der zweite vordefinierte Wert 0 ist.

13. Vorrichtung nach Anspruch 11, wobei die Vorrichtung ein Home-Gateway-Gerät ist.

14. Vorrichtung nach Anspruch 13, wobei das Home-Gateway-Gerät ein Router oder eine Bridge oder ein Brouter ist.

## Revendications

1. Un procédé, ledit procédé comprenant :
la définition d'un numéro d'identification par défaut d'un commutateur de réseau local virtuel à 0 ;
la réception d'un paquet de données d'une interface de réseau local ;
l'application d'un en-tête de réseau local virtuel avec un numéro d'identification 0 par ledit commutateur si ledit numéro d'identification de réseau local virtuel dudit commutateur est 0 et si le paquet de données n'est pas balisé ;
la détermination si un numéro d'identification de réseau local virtuel dans un en-tête dudit paquet de données est une première valeur prédéfinie ;
la traduction du numéro d'identification de réseau local virtuel en une seconde valeur prédéfinie dans ledit en-tête dudit paquet de données si ledit numéro d'identification de réseau local virtuel est égal à ladite première valeur prédéfinie ; et
le transfert dudit paquet de données vers une interface réseau de pile de protocole de réseau local.

2. Le procédé selon la revendication 1, dans lequel ladite première valeur prédéfinie est 0 et ladite seconde valeur prédéfinie est un de numéro d'identification de réseau local virtuel prédéfini et valide compris entre 1 et 4094.

3. Le procédé selon la revendication 1, dans lequel ladite étape d'application est réalisée par e paramétrage par ledit commutateur du numéro d'identification de réseau local virtuel dudit paquet de données sur ledit numéro d'identification de réseau local virtuel par défaut.

4. Un procédé, ledit procédé comprenant :
la création d'une entrée de table dans une table de commutateur de réseau local virtuel pour le numéro d'identification de réseau local virtuel 0 ;
la réception d'un paquet de données d'une interface réseau de pile de protocole de réseau local ;
la détermination si un numéro d'identification de réseau local virtuel dans un en-tête dudit paquet de données est une première valeur prédéfinie ;
la traduction du numéro d'identification de réseau local virtuel en une seconde valeur prédéfinie dans ledit en-tête dudit paquet de données si ledit numéro d'identification de réseau local virtuel est égal à ladite première valeur prédéfinie ;
le transfert dudit paquet de données vers un port de gestion hôte du commutateur ;
la réalisation d'une recherche de table dans ladite table de commutateur de réseau local virtuel afin de localiser une interface de réseau local adaptée vers laquelle transférer ledit paquet de données ; et
le transfert dudit paquet de données dudit port de gestion hôte dudit commutateur vers ladite interface de réseau local adaptée.

5. Le procédé selon la revendication 4, dans lequel ladite première valeur prédéfinie est un numéro d'identification de réseau local virtuel prédéfini valide compris entre 1 et 4094 et ladite seconde valeur prédéfinie est 0.

6. Le procédé selon la revendication 4, dans lequel ladite étape d'application est réalisée à l'aide de ladite entrée de table de commutateur de réseau local virtuel correspondant au numéro d'identification de réseau local virtuel 0.

7. Un appareil comprenant :
un commutateur ayant pour numéro d'identification de réseau local virtuel par défaut 0 ;
ledit commutateur adapté à la réception d'un paquet de données d'une interface de réseau local, ledit paquet de données étant un paquet de données balisé ou un paquet de données non balisé ;
ledit commutateur adapté à l'application d'un en-tête de réseau local virtuel avec pour numéro d'identification 0 audit paquet de données non balisé, si ledit numéro d'identification de réseau local virtuel dudit commutateur est 0, balisant ainsi ledit paquet de données non balisé ;
un pilote de réseau local adapté à la réception dudit paquet de données balisé ;
ledit pilote de réseau local adapté à la détermination si un numéro d'identification de réseau local virtuel dans un en-tête dudit paquet de données balisé est une première valeur prédéfinie ;
ledit pilote de réseau local adapté à la traduction du numéro d'identification de réseau local virtuel en une seconde valeur prédéfinie dans ledit en-tête dudit paquet de données si ledit numéro d'identification de réseau local virtuel est égal à ladite première valeur prédéfinie ; et
ledit pilote de réseau local adapté au transfert dudit paquet de données vers une interface réseau de pile de protocole de réseau local.

8. L'appareil selon la revendication 7, dans lequel ledit appareil est un dispositif de passerelle domestique.

9. L'appareil selon la revendication 8, dans lequel ledit dispositif de passerelle domestique est un routeur, un pont ou un pont-routeur.

10. L'appareil selon la revendication 5, dans lequel ladite première valeur prédéfinie est 0 et ladite seconde valeur prédéfinie est un de numéro d'identification de réseau local virtuel prédéfini et valide compris entre 1 et 4094.

11. Un appareil comprenant :
un commutateur disposant d'une entrée de table dans une table de commutateur de réseau local virtuel pour le numéro d'identification de réseau local virtuel 0 ;
un pilote de réseau local adapté à la transmission du paquet de données balisé vers un port de gestion hôte dudit commutateur ;
ledit pilote de réseau local adapté à la détermination si un numéro d'identification de réseau local virtuel dans un en-tête d'un paquet de données balisé est une première valeur prédéfinie ;
ledit pilote de réseau local adapté à la traduction du numéro d'identification de réseau local virtuel en une seconde valeur prédéfinie dans ledit en-tête dudit paquet de données balisé si ledit numéro d'identification de réseau local virtuel est égal à ladite première valeur prédéfinie ;
ledit pilote de réseau local adapté au transfert dudit paquet de données balisé vers un port de gestion hôte du commutateur ;
ledit commutateur adapté à la réalisation d'une recherche de table dans ladite table de commutateur de réseau local virtuel afin de localiser une interface de réseau local adaptée vers laquelle transférer ledit paquet de données ;
et
ledit commutateur adapté au transfert dudit paquet de données dudit port de gestion hôte dudit commutateur vers ladite interface de réseau local adaptée.

12. L'appareil selon la revendication 11, dans lequel ladite première valeur prédéfinie est un numéro d'identification de réseau local virtuel prédéfini et valide compris entre 1 et 4094 et ladite seconde valeur prédéfinie est 0.

13. L'appareil selon la revendication 11, dans lequel ledit appareil est un dispositif de passerelle domestique.

14. L'appareil selon la revendication 13, dans lequel ledit dispositif de passerelle domestique est un routeur, un pont ou un pont-routeur.
